Europäisches Patentamt

European Patent Office

Office européen des brevets

(19)

(11) Veröffentlichungsnummer : **0 111 815**
**B1**

(12) **EUROPÄISCHE PATENTSCHRIFT**

(45) Veröffentlichungstag der Patentschrift :
25.03.87

(21) Anmeldenummer : 83112210.6

(22) Anmeldetag : 05.12.83

(51) Int. Cl.⁴ : **G 01 M 3/16, D 06 F 39/08**

(54) **Leckwächter.**

(30) Priorität : **16.12.82 DE 3246669**

(43) Veröffentlichungstag der Anmeldung :
**27.06.84 Patentblatt 84/26**

(45) Bekanntmachung des Hinweises auf die Patenterteilung : **25.03.87 Patentblatt 87/13**

(84) Benannte Vertragsstaaten :
**AT BE CH DE IT LI NL SE**

(56) Entgegenhaltungen :
**AT-B- 368 811**
**DE-A- 1 926 791**
**DE-A- 2 539 279**
**DE-A- 2 923 536**

(73) Patentinhaber : **Siemens Aktiengesellschaft Berlin**
**und München**
**Wittelsbacherplatz 2**
**D-8000 München 2 (DE)**

(72) Erfinder : **Stieglbauer, Walter, Dipl.-Ing.**
**Schlatzendorf 141**
**D-8374 Viechtach (DE)**
Erfinder : **Ott, Hans**
**Brunnstrasse 33**
**D-8400 Regensburg (DE)**

Jouve, 18, rue St-Denis. 75001 Paris, France

## Beschreibung

Die Erfindung bezieht sich auf einen Leckwächter nach Gattungsbegriff von Patentanspruch 1. Ein derartiger Leckwächter ist bekannt (AT-B-368 811). Der Sensor weist zwei Kontakte auf, die bei einem elektrisch leitenden Flüssigkeitsfilm überbrückt werden. Der Leckwächter gibt dann eine Steuerspannung für Geräte ab, beispielsweise für ein Magnetventil in einer Flüssigkeitszuleitung. Die zwei Kontakte oder Elektroden wirken auf die Eingänge eines Komparators. Sein einer Eingang ist über einen Vorwiderstand an einem Kontakt angeschlossen und am anderen Eingang liegt eine einstellbare Referenzspannung an.

Beim bekannten Leckwächter (AT-B-368 311) ist ein Funktionszustandsanzeiger von einem bistabilen Schalter in einer Schaltvorrichtung gesteuert. Der bistabile Schalter läßt sich von einem Wiedereinschalttaster aus einschalten. Eine Funktionsüberprüfung erfolgt insoweit, als man durch einen Signalgeber erkennt, ob der Leckwächter eingeschaltet ist oder angesprochen und abgeschaltet hat. Störungen des Sensors und der Sensorleitung werden dagegen nicht erkannt.

Leckwächter registrieren Flüssigkeiten, wie zum Beispiel aus Wasch- oder Geschirrspülmaschinen infolge eines Defekts ausgelaufenes Wasser, das elektrische Kontakte eines Sensors mit einem Wasserfilm überbrückt. Beim bekannten Leckwächter wird durch die Komparatorschaltung erreicht, daß auch relativ kleine Ströme durch einen Wasserfilm, der die beiden Kontakte verbindet, ausreichend verstärkt werden, um ein Magnetventil zu betätigen. Es wäre jedoch wünschenswert, daß ein Schutz auch dann besteht, wenn der Leckwächter bei einem Bruch der Sensorleitung nicht arbeiten kann.

Der Erfindung liegt die Aufgabe zugrunde, einen Leckwächter der geschilderten Art zu entwickeln, der nicht nur Flüssigkeiten mit sehr geringer Leitfähigkeit zuverlässig erfaßt, sondern auch die Einsatzbereitschaft des Sensors überwacht.

Die geschilderte Aufgabe wird durch einen Leckwächter nach Patentanspruch 1 gelöst.

Durch einen weiteren Komparator wird der Leckwächter auf Funktionstüchtigkeit geprüft, indem ein Bruch in der Sensorleitung erkannt wird.

Bei einem bekannten Leckwächter, der mit zwei Komparatoren arbeitet (DE-A-2 539 279) wird zur Überprüfung auf regulären Betrieb der Gerätestrom zwischen Steckdose und angeschlossenem Gerät über einen Wandler auf die Eingänge eines der Komparatoren potentialverändernd übertragen. Zu diesem Komparator ist ein weiterer Komparator in Reihe geschaltet, dessen Eingangspotential durch einen Flüssigkeitsfilm an Kontakten verändert wird. Ein Bruch in der Sensorleitung kann so nicht erkannt werden. Es wird lediglich erreicht, daß das Magnetventil nur öffnet, wenn ein Gerätestrom zustandekommt. Das Abschalten bei defekter Sensorleitung ist dadurch nicht sichergestellt.

Der Leckwächter nach der Erfindung benötigt keinen Wandler und kommt zur Überwachung auf intakte Sensorleitung, also auf Funktionstüchtigkeit, ohne einen Gerätestrom aus. Er ist daher nicht nur wirtschaftlicher und kleiner herzustellen, sondern er kann auch auf elektrisch leitende Flüssigkeiten unabhängig von elektrischen Geräten und deren Betrieb überwachen.

Zum Anschließen eines Magnetventils an die Komparatoren kann der Ausgang des ersten Komparators und der Ausgang des zweiten Komparators mit einer Auswerteschaltung verbunden werden, die ein Magnetventil, das bei Stromfluß geöffnet ist, bei Signalgabe von einem der Komparatoren oder von beiden Komparatoren stromlos setzt und schließt. Geeignete Schwellwerte können mittels des Spannungsteilers so gewählt werden, daß die Komparatoren noch kleine Änderungen der Spannung an den Sensorkontakten registrieren.

Der Leckwächter kann auch Signalgeber in Betrieb setzen, so akustische Signalgeber, wie ein Zusatzhorn oder optische Anziegegeräte, wie beispielsweise Leuchtdioden, wie es an sich bekannt ist. Wenn Alarm gegeben wird, kann eine Bedienungsperson weitere Maßnahmen, die über das automatische Abschalten einer Leitung hinausgehen, ergreifen.

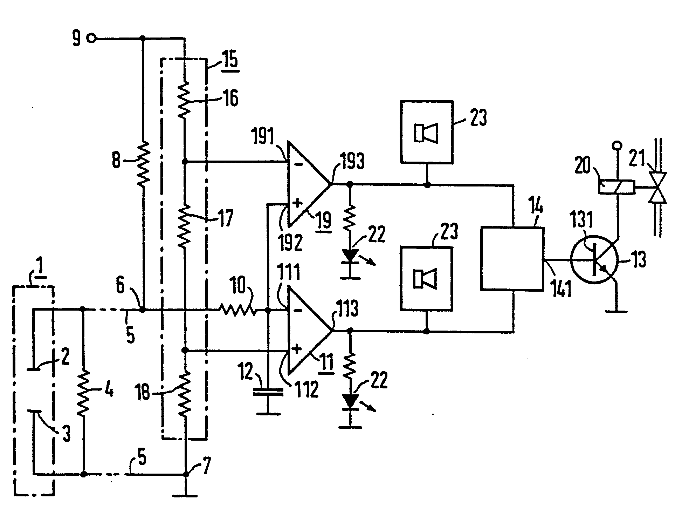

Die Erfindung soll anhand eines in der Zeichnung grob schematisch wiedergegebenen Ausführungsbeispiels näher erläutert werden.

In der Zeichnung ist die Beschaltung des erfindungsgemäßen Leckwächters veranschaulicht.

Ein Sensor 1 zur Registrierung von elektrisch leitenden Flüssigkeiten weist zwei Kontakte 2 und 3 auf. Wenn der Sensor 1 auf dem Boden angeordnet ist, können bereits durch einen dünnen Film ausgelaufener Flüssigkeit die beiden Kontakte 2 und 3 überbrückt werden. Parallel zum Sensor 1 ist ein erster ohmscher Widerstand 4 geschaltet, der zur Überwachung einer zweiadrigen Sensorleitung 5 auf Unterbrechung dient. Diese geht von Sensor 1 und erstem Widerstand 4 aus und führt zu zwei Anschlußpunkten 6 und 7, wobei der Anschlußpunkt 7 auf Bezugspotential liegt. Im Ausführungsbeispiel dient Erde als Bezugspotential.

Der Anschlußpunkt 6 ist über einen zweiten ohmschen Widerstand 8 mit einer Spannungsquelle 9 und über einen dritten ohmschen Widerstand 10 mit dem negativen Eingang 111 eines ersten Komparators 11 verbunden.

Der dritte ohmsche Widerstand 10 ist über eine Kapazität 12 für Wechselspannung an Erdpotential gelegt. Dadurch werden störende Wechselspannungen ausgekoppelt.

Der erste Komparator 11 weist einen negativen Eingang 111 und einen positiven Eingang 112 auf, sowie einen Ausgang 113, der mit einer Auswerteschaltung, bestehend aus einem Schaltglied 13 nach einer Verknüpfungsschaltung 14, verbunden ist.

Im Ruhezustand liegt am Anschlußpunkt 6 ein konstantes Potential an. Der Ruhezustand liegt vor, wenn am Sensor 1 keine leitende Verbindung besteht und die Sensorleitung 5 nicht unterbrochen ist. Dann wird das Potential an der Anschlußklemme 6 im wesentlichen durch den ersten ohmschen Widerstand 4 bestimmt.

Am positiven Eingang 112 des ersten Komparators 11 ist ein Spannungsteiler 15 angeschlossen, der mit der Spannungsquelle 9 verbunden ist und aus beispielsweise drei in Reihe geschalteten ohmschen Widerständen 16 bis 18 besteht. Ein Abgriff zwischen den ohmschen Widerständen 17 und 18 liefert ein Schwellwertpotential für den ersten Komparator 11. Dieses wird so groß gewählt, daß es im Ruhezustand kleiner ist als das Potential am negativen Eingang 111 des ersten Komparators 11.

Wenn sich durch überbrückte Kontakte 2 und 3 am Sensor 1 das Potential am Anschlußpunkt 6 und folglich auch am negativen Eingang 111 des ersten Komparators 11 so weit vermindert, daß dieses das gleichbleibende Schwellwertpotential am positiven Eingang 112 des ersten Komparators 11 unterschreitet, wird infolgedessen über den Ausgang 113 des ersten Komparators 11 ein Signal an die Verknüpfungsschaltung 14 und damit an das Schaltglied 13 abgegeben.

Der Anschlußpunkt 6 ist außerdem über den dritten ohmschen Widerstand 10 mit dem positiven Eingang 192 eines zweiten Komparators 19 verbunden. Der zweite Komparator 19 weist einen positiven Eingang 192 und einen negativen Eingang 191 auf, sowie einen Ausgang 193, der über die Verknüpfungsschaltung 14 mit dem Schaltglied 13 in Kontakt steht. Der negative Eingang 191 des zweiten Komparators 19 ist mit einem Abgriff zwischen den ohmschen Widerständen 16 und 17 des Spannungsteilers 15 verbunden, der ein Schwellwertpotential für den zweiten Komparator 19 liefert. Dieses wird so gewählt, daß es im Ruhezustand größer ist als das Potential am positiven Eingang 192. Bei einer Unterbrechung der Sensorleitung 5 steigt das Potential an dem Anschlußpunkt 6 und folglich auch am positiven Eingang 192 des zweiten Komparators 19 so weit an, daß dieses das gleichbleibende Schwellwertpotential am negativen Eingang 191 des zweiten Komparators 19 überschreitet. Am Ausgang 193 des zweiten Komparators 19 wird dann ein Signal an die Verknüpfungsschaltung 14 abgegeben.

Ist das Schaltglied 13 ein Transistor, so ist mit dem Ausgang 141 der Verknüpfungsschaltung 14 dessen Basis 131 verbunden. Im Ruhezustand betreibt ein Emitter-Kollektor-Strom Geräte, wie beispielsweise ein Magnetventil 20 in einer Flüssigkeitszuleitung 21. Ein Komparatorsignal erdet den Ausgang 141 der Verknüpfungsschaltung 14, wodurch der Transistor sperrt.

Es sind als optische Anzeigegeräte auch mit den Ausgängen 113 und 193 der Komparatoren 11 und 19 in Verbindung stehende Leuchtdioden 22, aber auch akustische Signalgeber 23 denkbar. Als alternative Ausbildung können eine Leuchtdiode 22 und ein akustischer Signalgeber 23 mit der Verknüpfungsschaltung 14 verbunden sein.

## Patentansprüche

1. Leckwächter mit einem Sensor (1), der zwei durch einen elektrisch leitenden Flüssigkeitsfilm überbrückbare Kontakte (2 und 3) aufweist und eine Steuerspannung für Geräte abgibt, wie z. B. für ein Magnetventil (20) in einer Flüssigkeitszuleitung (21) und/oder für einen akustischen Signalgeber (23), wozu ein erster Komparator (11) durch eine zweiadrige Sensorleitung (5) mit dem Sensor (1) derart verbunden ist, daß der Komparator (11) mit einem Kontakt (2) über einen Vorwiderstand (10) und einen ersten Anschlußpunkt (6) in verbindung steht und mit dem anderen Kontakt (3) über einen Spannungsteiler (15) und einen zweiten Anschlußpunkt (7) zu einer Spannungsquelle in Verbindung steht, wobei die am Sensor (1) anliegende Spannung mit einem durch den Spannungsteiler (15) vorgegebenen Schwellwert verglichen wird und bei Unterschreiten infolge Überbrückung der Kontakte (2, 3) des Sensors (1) über einen Ausgang (113) des Komparators (11) ein Signal als Steuerspannung für anzuschließende Geräte abgegeben wird, dadurch gekennzeichnet, daß parallel zum Sensor (1) ein erster ohmscher Widerstand (4) geschaltet ist, wobei der erste Anschlußpunkt (6) über einen zweiten ohmschen Widerstand (8) mit der Spannungsquelle verbunden ist, daß ein zweiter Komparator (19) mit seinen positiven Eingang (192) mit dem ersten Anschlußpunkt (6) in Verbindung steht und sein negativer Eingang (191) mit einem weiteren Abgriff des Spannungsteilers (15) verbunden ist, wobei die am ersten ohmschen Widerstand (4) anliegende Spannung mit einem durch den Spannungsteiler (15) vorgegebenen Schwellwert verglichen wird und bei Überschreiten infolge Unterbrechung der Sensorleitung (5) über einen Ausgang (193) des zweiten Komparators (19) ein Signal als Steuerspannung für anzuschließende Geräte abgebbar ist.

2. Leckwächter nach Anspruch 1, dadurch gekennzeichnet, daß zum Anschließen des Magnetventils (20) an die Komparatoren (11 und 19), der Ausgang (113) des ersten Komparators (11) und der Ausgang (193) des zweiten Komparators (19) mit einer Auswerteschaltung (14 ; 13) in Verbindung stehen, die das Magnetventil (20), das bei Stromfluß geöffnet ist, bei Signalabgabe von einem der Komparatoren (11 und 19) oder von beiden Komparatoren (11 und 19) stromlossetzt und schließt.

## Claims

1. A leak detector comprising a sensor (1) which has two contacts (2 and 3) which can be bridged by an electrically-conductive liquid film and which emits a control voltage for devices, for example, a magnetic valve (20) in a liquid supply line (21) and/or for an acoustic signal generator (23), for which purpose a first comparator (11) is connected to the sensor (1) by a two-wire sensor line (5) in such manner that the comparator (1) is connected to one contact *via* a series resistor (10) and a first terminal point (6) and is connected to the other contact (3) and a second terminal point (7) *via* a voltage divider (15) across a voltage source, where the voltage connected to the sensor (1) is compared with a threshold value predetermined by the voltage divider (15), and in the event that it falls below this threshold value due to bridging of the contacts (2, 3) of the sensor (1), a signal voltage is emitted *via* an output (113) of the comparator (11) to control devices which are to be connected, characterised in that a first resistor (4) is connected in parallel with the sensor (1), where the first terminal point (6) is connected to the voltage source *via* a second resistor (8), that a second comparator (19) is connected *via* its positive input (192) to the first terminal point (6) and is connected by its negative input (191) to a further tapping of the voltage divider (15), where the voltage connected to the first resistor (4) is compared with a threshold value predetermined by the voltage divider (15) and in the event that it exceeds this threshold value due to an interruption of the sensor line (5) a signal voltage can be emitted *via* an output (193) of the second comparator (19) to control devices which are to be connected.

2. A leak detector as claimed in Claim 1, characterised in that to permit the magnetic valve (20) to be connected to the comparators (11 and 19), the output (113) of the first comparator (11) and the output (193) of the second comparator (19) are connected to an analysis circuit (14 ; 13) by which the magnetic valve (20), which is open when current flows, is de-energised and closed, which signals are emitted from one of the comparators (11 and 19) or from both of the comparators (11 and 19).

**Revendications**

1. Détecteur de fuite possédant un capteur (1) qui présente deux contacts (2 et 3) pouvant être court-circuités par un film de liquide électriquement conducteur, et qui délivre une tension de commande pour des appareils, par exemple pour une électrovanne (20) dans une conduite d'alimentation en liquide (21) et/ou pour un générateur de signal acoustique (23), le détecteur comprenant, à cet effet, un premier comparateur (11) relié au capteur (1) par une ligne bifilaire de capteur (5), de manière que le capteur (11) soit en liaison avec un contact (2) à travers une résistance série (10) et avec un premier point de connexion (6) et soit en liaison avec l'autre contact (3) à travers un diviseur de tension (15) et un second point de connexion (7), menant à une source de tension, détecteur dans lequel la tension appliquée au capteur (1) est comparée avec une valeur de seuil préfixée par le diviseur de tension (15) et, lorsque la tension descend sous ce seuil par suite de la mise en court-circuit des contacts (2, 3) du capteur (1), le comparateur (11) délivre à sa sortie (113) un signal servant de tension de commande pour des appareils à raccorder, caractérisé en ce qu'une première résistance ohmique (4) est branchée en parallèle avec le capteur (1) et le premier point de connexion (6) est relié à travers une deuxième résistance ohmique (8) à la source de tension et qu'un second comparateur (19) est en liaison, par son entrée positive (192), avec le premier point de connexion (6) et est relié par son entrée négative (191) à une autre prise du diviseur de tension (15), la tension appliquée à la première résistance ohmique (4) étant comparée avec une valeur de seuil préfixée par le diviseur de tension (15) et, lorsque la tension dépasse cette valeur de seuil, par suite de l'interruption de la ligne de capteur (5), le second comparateur (19) peut délivrer, par sa sortie (193), un signal servant de tension de commande pour des appareils à raccorder.

2. Détecteur selon la revendication 1, caractérisé en ce que, pour le raccordement de l'électrovanne (20) aux comparateurs (11 et 19), la sortie (113) du premier comparateur (11) et la sortie (193) du second comparateur (19) sont en liaison avec un circuit d'exploitation (14 ; 13) qui, en cas de délivrance d'un signal par l'un ou par les deux comparateurs (11 et 19), coupe le courant et ferme l'électrovanne (20), laquelle est ouverte lorsqu'elle reçoit du courant.